# EUROPÄISCHE PATENTSCHRIFT

(11) **EP 2 886 081 B1**
(45) Veröffentlichungstag und Bekanntmachung des Hinweises auf die Patenterteilung: **01.01.2020**
(21) Anmeldenummer: 14004218.5
(22) Anmeldetag: 22.04.2003
(51) Int. Cl.: A61C 17/22, A46D 1/00, A46B 9/04, A61C 17/34

(54) **Elektrozahnbürste mit Bürstenkopf**
Electric toothbrush with brush head
Brosse à dents électrique dotée d'une tête de brosse

(43) Veröffentlichungstag der Anmeldung: 24.06.2015
(62) Teilanmeldung aus: 07002691.9
(73) Patentinhaber: Trisa Holding AG, 6234 Triengen (CH)
(72) Erfinder: Fischer, Franz, CH-6234 Triengen (CH); Gross, Peter, CH-6204 Sempach (CH)
(74) Vertreter: Schaad, Balass, Menzl & Partner AG

(56) Entgegenhaltungen:
- DE-A1- 2 728 672
- JP-A- 11 075 939
- JP-A- 2002 248 118
- US-A- 5 305 489
- US-A- 5 533 227
- US-A- 6 088 869

## Beschreibung

Die Erfindung betrifft eine Elektrozahnbürste welche einen Bürstenkopf aufweist, mit den Merkmalen gemäss dem unabhängigen Anspruch 1.

Eine Zahnbürste gemäss der älteren WO 2004/049860A1 weist an einem Ende zugespitzte Borsten aus Polyester von einer Gesamtlänge von 13 bis 18 mm und von einer Länge der Zuspitzung von 4 bis 8 mm auf. Um die Zahnbürste zu produzieren, werden die nicht zugespitzten Abschnitte der Borsten in in einem Muster angeordnete Durchgangslöcher eines Borstenträgers hineingestossen. Der Boden des Borstenträgers wird thermisch geschmolzen und dabei die Borsten am Borstenträger befestigt. Der Borstenträger wird dann in den Kopf der Zahnbürste eingebaut.

Elektrozahnbürsten haben üblicherweise einen Handgriff, in dem ein Motor untergebracht ist, sowie einen in der Regel auswechselbaren Bürstenkopf. Ein Bürstenkopf mit einem drehbeweglich antreibbaren Borstenträger ist beispielsweise aus der DE-U 295 20 230 bekannt. Eine Elektrozahnbürste, deren Bürstenkopf in Vibration versetzt wird, geht aus der WO 01/28452 hervor. Des weiteren sind z.B. aus der CH 421 049 auch Elektrozahnbürsten bekannt, deren Bürstenköpfe nach Art einer Wippe eine Schwenkbewegung um ihre Längsachse ausführen. Bekannte Elektrozahnbürsten haben einen Bürstenkopf, der mit Bündeln aus konventionellen Borsten versehen ist. Diese sind zur Vermeidung von Verletzungen an ihrem Ende abgerundet.

Handzahnbürsten mit einem Borstenfeld, das vollständig oder teilweise aus zugespitzten Filamenten besteht, sind beispielsweise aus der EP-A 0 596 633, US 6 088 869 und der DE-U 90 12 603 bekannt. Die zugespitzten Filamente dienen zur Behandlung oder Reinigung feiner Strukturen in der Oberfläche des Zahns, z.B. von feinen Rissen, die mit konventionellen zylindrischen Borsten nicht effektiv bearbeitet werden können. Des weiteren können die zugespitzten Filamente dank der schmaleren Spitzen besser in die Zahnzwischenräume eindringen und diese reinigen. Elektrozahnbürsten mit zugespitztem Besatz sind nicht bekannt.

Zugespitzte Borsten reagieren im Bereich der Spitze jedoch schlecht auf mechanischen Abrieb. Bei zu grosser mechanischer Belastung brechen die Spitzen dieser Borsten und können zum einen die Reinigungswirkung nicht mehr entfalten und bergen zum anderen die Gefahr der Verletzung des Zahnfleischs durch die beim Abbrechen entstehenden Kanten und Ecken.

Der Erfindung liegt daher die Aufgabe zugrunde, bei minimalen Verletzungspotential des Zahnfleisches die Reinigungswirkung von Zahnbürsten mit zugespitztem Besatz weiter zu verbessern und die Lebensdauer der Borsten zu optimieren.

Die Aufgabe wird gelöst durch eine Elektrozahnbürste mit den Merkmalen von Anspruch 1. Vorteilhafte Weiterbildungen der Erfindung ergeben sich aus den abhängigen Ansprüchen, der Beschreibung und den Zeichnungen.

Der Erfindung liegt die Erkenntnis zugrunde, dass die Reinigungswirkung von zugespitzten Filamenten bei minimalem Verschleiss optimal genutzt werden kann, wenn der Weg, den die zugespitzten Filamente beim bestimmungsgemässen Gebrauch zurücklegen, eingeschränkt wird. Diese Möglichkeit besteht bei Elektrozahnbürsten, bei denen der Bürstenkopf bzw. der Borstenträger und damit die Borsten durch den Antrieb auf vorbestimmte Weise in Bewegung versetzt wird und in der Regel nur eine minimale zusätzliche manuelle Putzbewegung erfolgt. Bei Elektrozahnbürsten lässt sich daher der bei Gebrauch zurückgelegte Weg der zugespitzten Filamente bzw. ihrer Spitzen durch die Anordnung der Filamente auf dem Borstenträger gut kontrollieren und einschränken. Erfindungsgemäss sind die zugespitzten Filamente derart auf dem Borstenträger angeordnet, dass ihre Spitzen beim Betrieb der Elektrozahnbürste höchstens einen vorbestimmten maximalen Weg dₘₐₓ zurücklegen. Der restliche Borstenträger kann mit konventionellen Borsten und/oder weiteren Reinigungselementen, z.B. weichelastischen Elementen, versehen sein. Konventionelle Borsten und/oder sonstige Reinigungselemente können auch zwischen den zugespitzten Filamenten angeordnet sein.

Durch die hochfrequente Bewegung der zugespitzten Filamente ist eine optimale Putzleistung gegeben. Durch die Einschränkung des Wegs, den die Spitzen zurücklegen, ist der Verschleiss der Borsten minimiert, so dass auch das Verletzungsrisiko für das Zahnfleisch gering gehalten wird.

Erfindungsgemäß beträgt der maximale Weg dₘₐₓ der Spitzen 3 mm. Diese Abstände entsprechen den typischen Abmessungen grösserer Zahnzwischenräume bzw. der Zähne. Werden diese maximalen Werte zugrundegelegt, bewegen sich die Borsten innerhalb der Strukturen im Gebiss. Damit können insbesondere feinste Fissuren auf der Zahnoberfläche und die Interdentalräume gut erreicht werden. Des weiteren kann ein sogenannter "Peitscheneffekt" beim Überstreichen der Zahnzwischenräume senkrecht zu deren Ausrichtung vermindert werden. Beim "Peitscheneffekt" biegen sich die zugespitzten Filamente aufgrund ihrer Eigenflexibilität an Hindernissen, wie dem Übergang zwischen zwei Zähnen, durch und schnellen bei einer weiteren Bewegung peitschenartig vor, wodurch die Filamente stark beansprucht werden.

Die Filamente können einseitig oder beidseitig zugespitzt sein. Sie können auch zumindest im Bereich der Spitze gefärbt sein. Durch den Farbverlauf ist der Verschleiss der Bürste für den Benutzer sichtbar, z.B. wenn sich die Farbe mit der Zeit auswäscht.

Die Erfindung wird im folgenden mit Bezug auf die Zeichnungen näher erläutert. Dabei zeigen rein schematisch:
- Fig. 1a, b: drei Zähne in Seitenansicht bzw. Aufsicht zur Darstellung der gewünschten Bewegungen;
- Fig. 2: einen Bürstenkopf mit einem drehbar damit verbundenen Borstenträger mit konventionellen Borsten und zugespitzten Filamenten;
- Fig. 3: einen Bürstenkopf mit einem um die Längsachse schwenkbaren Borstenträger mit konventionellen Borsten und zugespitzten Filamenten;
- Fig. 4: einen Bürstenkopf mit einem vibrierenden Borstenträger mit konventionellen Borsten und zugespitzten Filamenten;
- Fig. 5a-c: einen Bürstenkopf mit einem mehrteiligen Borstenträger;
- Fig. 6a-d: bevorzugte Anordnungen von Bündeln aus zugespitzten Filamenten auf einem Bürstenkopf;
- Fig. 7: einen Borstenträger mit Bündeln aus zugespitzten Filamenten;
- Fig. 8: einen Borstenträger mit Bündeln aus zugespitzten Filamenten und konventionellen Borsten;
- Fig. 9a, b: eine konventionelle bzw. zugespitzte Borste;
- Fig. 10a-e: Bündel aus zugespitzten Filamenten mit verschiedenen Formen;
- Fig. 10f,g: Bündel aus zugespitzten Filamenten mit verschiedenen Profilen;
- Fig. 11a-e: Bürstenköpfe in Seitenansicht mit verschiedenen Profilen der zugespitzten Filamente;
- Fig. 12: einen Bürstenkopf mit Bündeln aus Borsten gemäss Fig. 10a.

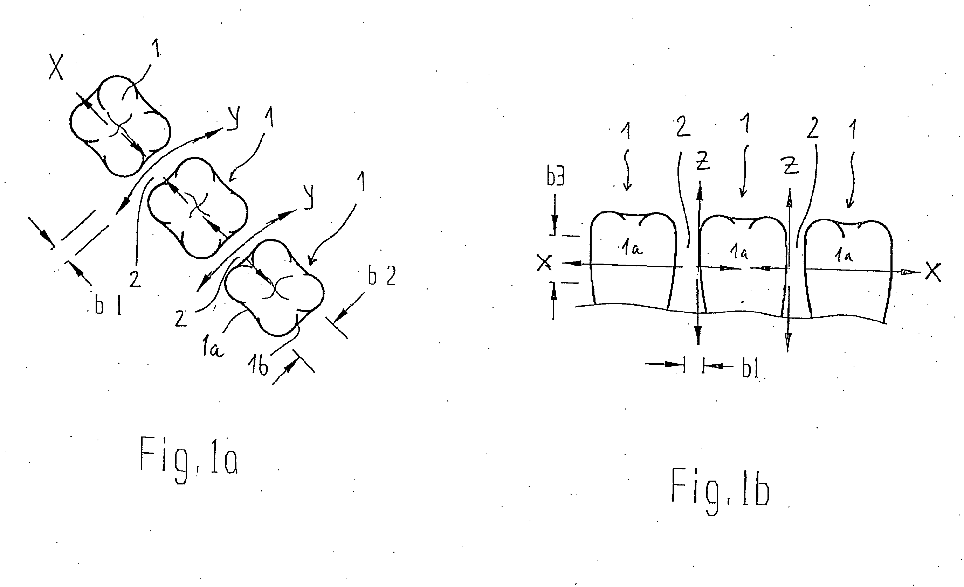

Fig. 1a, b zeigt drei in einer Zahnreihe stehende Zähne 1 mit dazwischen liegenden Interdentalräumen 2 in Seitenansicht bzw. Aufsicht. Beispiele für Bürstenköpfe 3 mit zugespitzten Filamenten 5 gehen aus den übrigen Figuren hervor.

Mit zugespitzten Filamenten 5 werden bevorzugt kleine Bewegungen entlang der Zahnreihe in Richtung X und etwas grössere Bewegungen quer dazu, d.h. in Richtung Y in der Zahnebene bzw. in Richtung Z senkrecht zur Zahnebene, ausgeführt. Zu grosse Bewegungen entlang der X-Richtung sollen vermieden werden, da diese mit einer grossen mechanischen Belastung der zugespitzten Filamente 5 einhergehen (Peitscheneffekt). Damit erstrecken sich die gewünschten Bewegungen der zugespitzten Filamente 5 über die gesamte Breite b1 der Interdentalräume 2 und über einen Streifen der Breite b2 bzw. b3 entlang der Flanken 1a, 1b der Zähne. Die Breite b1 beträgt typischerweise ca. 2 mm, die Breite b2, b3 jeweils ca. 5 mm.

Um im Vergleich zum manuellen Putzen eine verbesserte Reinigungswirkung zu erreichen, wird der Bürstenkopf 3 derart angetrieben, dass die zugespitzten Filamente 5 mehr als 1'000 Putzbewegungen pro Minute vorzugsweise aber mehr als 5'000 Bewegungen erreichen. Beim manuellen Putzen werden deutlich weniger als 1000 Bewegungen während des gesamten Putzvorgangs erreicht. Pro Bewegung legt die Spitze 5a einer zugespitzten Borste eine Distanz d bezüglich dem ruhenden Gebiss zurück (d.h. ohne Überlagerung einer gegebenenfalls manuell ausgeführten Putzbewegung). Um die zugespitzten Filamente 5 bei dieser hochfrequenten Hin- und Herbewegung an den Zahnoberflächen und insbesondere beim Wechsel zwischen Zahnoberfläche 1a, 1b und Zahnzwischenräumen nicht übermässig zu belasten, ist der Weg d der Spitzen 5a der Filamente 5 kleiner als ein vorbestimmter maximaler Weg dₘₐₓ, der 3 mm beträgt. Diese Werte entsprechen in etwa der Grösse von grossen Zahnzwischenräumen 2, welche somit ohne die Beschädigung der Spitzen 5a optimal gereinigt werden können. Durch die Kontrolle und Beschränkung der Bewegungen der Spitzen 5a wird das Risiko von Verletzungen des Zahnfleischs reduziert.

In einer vorteilhaften Weiterbildung hängt der maximale Weg dₘₐₓ der Spitzen 5a von der Bewegungsrichtung ab, wobei der maximale Weg d_{max,längs} in Längsrichtung L des Bürstenkopfes 3 vorzugsweise geringer ist als der maximale Weg d_{max,quer} quer dazu. Die Längsrichtung L des Bürstenkopfs 3 entspricht im Gebrauch etwa der Richtung X der Zahnreihe, in der die Bewegungen der Borsten wegen des Zahn-Zahn-Übergangs und der damit einhergehenden Belastung der Borsten vorzugsweise einzuschränken sind. Damit wird der Geometrie des Gebisses Rechnung getragen und eine Bewegung entlang der Zahnzwischenräume 2, d.h. in y- und Z-Richtung, mit grösserer Auslenkung als quer dazu zugelassen. Bevorzugt ist d_{max,längs} 3 mm (X-Richtung) und d_{max,quer} 5 mm (Y-, Z-Richtung).

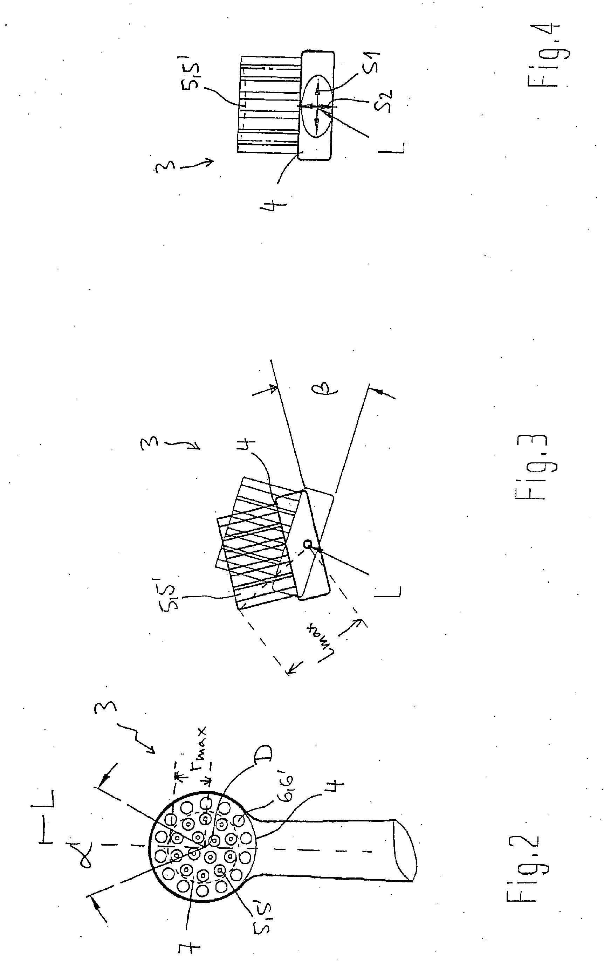

Fig. 2-4 und 5a-c zeigen verschiedene Beispiele für Bürstenköpfe mit einem Borstenfeld aus konventionellen Borsten 6 und zugespitzten Filamenten 5. Die Borsten 5, 6 sind jeweils in Bündeln 5', 6' auf einem Borstenträger 4 angeordnet. Die Bündel 6' aus konventionellen Borsten 6 sind durch einen leeren Kreis und die Bündel 5' aus zugespitzten Filamenten 5 durch einen Kreis mit einem Punkt symbolisiert.

Beim in Fig. 2 dargestellten Bürstenkopf 3 ist der Borstenträger 4 mit dem Bürstenkopf 3 um eine senkrecht zum Borstenträger 4 verlaufende Drehachse D hin- und herdrehbar verbunden. Dazu ist ein geeigneter Antrieb vorhanden (hier nicht dargestellt). Im Betrieb wird ein maximaler Drehwinkel α erreicht. Die zugespitzten Filamente 5 sind derart auf dem Borstenträger angeordnet, dass für den maximalen Abstand rₘₐₓ ihrer Austrittspunkte auf dem Borstenträger von der Drehachse D gilt: rₘₐₓ=dₘₐₓ ·180° : (πα), wobei dₘₐₓ der eingangs genannte maximale Weg ist. Genähert (Distanz der Umkehrpunkte statt Länge des Bogens) gilt rₘₐₓ=dₘₐₓ: (2sin (α/2)). Erfindungsgemäß gilt dₘₐₓ=3mm.

Derzeit sind Geräte mit Drehwinkeln bis 70° auf dem Markt. Der Durchmesser des Bürstenkopfes 3 beträgt in der Regel weniger als 20 mm. Die Bewegung der Spitzen 5a nimmt mit dem Radius bzw. dem Abstand zur Drehachse zu. Die folgende Tabelle gibt einige Werte für den Weg an, der in Abhängigkeit des Drehwinkels und des Radius berechnet wurde. Die grau hinterlegten Wegangaben gehören zu erfindungsgemäss für dₘₐₓ=3 mm zulässigen Wertepaaren Radius/Drehwinkel (dₘₐₓ=Distanz der Umkehrpunkte).

| Radius (mm) | α=10° | α=20° | α=30° | α=40° | α=50° | α=60° | α=70° |
|---|---|---|---|---|---|---|---|
| 1 | **0,2** | **0,3** | **0,5** | **0,7** | **0,8** | **1,0** | **1,1** |
| 2 | **0,3** | **0,7** | **1,0** | **1,4** | **1,7** | **2,0** | **2,3** |
| 3 | **0,5** | **1,0** | **1,6** | **2,1** | **2,5** | **3,0** | 3,4 |
| 4 | **0,7** | **1,4** | **2,1** | **2,7** | 3,4 | 4,0 | 4,6 |
| 5 | **0,9** | **1,7** | **2,6** | 3,4 | 4,2 | 5,0 | 5,7 |
| 6 | **1,0** | **2,1** | 3,1 | 4,1 | 5,1 | 6,0 | 6,9 |
| 7 | **1,2** | **2,4** | 3,6 | 4,8 | 5,9 | 7,0 | 8,0 |
| 8 | **1,4** | **2,8** | 4,1 | 5,5 | 6,8 | 8,0 | 9,2 |
| 9 | **1,6** | 3,1 | 4,7 | 6,2 | 7,6 | 9,0 | 10,3 |
| 10 | **1,7** | 3,5 | 5,2 | 6,8 | 8,5 | 10,0 | 11,5 |

Die Tabelle zeigt, dass bei kleinen Drehwinkeln im Prinzip der ganze Bürstenkopf 3 mit zugespitzten Borsten 5 besetzt werden kann und dass bei grossen Drehwinkeln nur ein zentrales Segment 7 mit zugespitzten Borsten 5 besetzt werden sollte.

Fig. 3 zeigt einen Bürstenkopf 3, der im Betrieb um seine Längsachse L verschwenkt wird, so dass der Bürstenkopf 3 eine wippende Seitwärtsbewegung ausführt. Der Bürstenkopf 3 überstreicht dabei einen Winkel β. Für den maximalen Abstand lₘₐₓ der Spitzen der zugespitzten Filamente von der Schwenkachse L gilt lₘₐₓ=dₘₐₓ·180° : (πβ) bzw. lₘₐₓ=dₘₐₓ: (2sin(β/2)) (Distanz der Umkehrpunkte), wobei dₘₐₓ·der eingangs genannte maximale Weg ist. Vorzugsweise ist dₘₐₓ=3mm.

Im Zusammenhang mit zugespitzten Borsten 5 bietet sich die wippende Seitwärtsbewegung besonders an. Mit diesem Zahnbürstentyp bewegen sich die zugespitzten Borsten 5 beim Gebrauch entlang den Interdentalräumen 2. Die für die Borsten und Zahnfleisch weniger erwünschte Bewegungsrichtung bleibt für die zugespitzten Borsten 5 aus. Bei dieser Bewegung sollte der maximal zurückgelegte Weg der Spitzen ebenfalls kleiner 3 mm sein. Der Drehwinkel kann somit anhand der folgenden Tabelle in Abhängigkeit des Abstands der Spitzen von der Schwenkachse festgelegt werden. Die grau hinterlegten Wegangaben gehören zu erfindungsgemäss für dₘₐₓ=3 mm zulässigen Wertepaaren Abstand/Schwenkwinkel. Bei einem mittleren Abstand von 12 mm sollte der Drehwinkel des Bürstenkopfes nicht grösser 15° gewählt werden.

| Abstand (mm) | β=10° | β=15° | β=20° | β=25° | β=30° | β=35° |
|---|---|---|---|---|---|---|
| 9 | **1,6** | **2,3** | 3,1 | 3,9 | 4,7 | 5,4 |
| 10 | **1,7** | **2,6** | 3,5 | 4,3 | 5,2 | 6,0 |
| 11 | **1,9** | **2,9** | 3,8 | 4,8 | 5,7 | 6,6 |
| 12 | **2,1** | 3,1 | 4,2 | 5,2 | 6,2 | 7,2 |
| 13 | **2,3** | 3,4 | 4,5 | 5,6 | 6,7 | 7,8 |
| 14 | **2,4** | 3,7 | 4,9 | 6,1 | 7,2 | 8,4 |
| 15 | **2,6** | 3,9 | 5,2 | 6,5 | 7,8 | 9,0 |

Fig. 4 zeigt rein schematisch einen Bürstenkopf 3, der in zwei Richtungen S1, S2 quer zur Längsrichtung L vibriert. Bei dieser Bewegungsvariante hat die Bürstenkopfgeometrie weniger Einfluss auf die Auslenkung der konventionellen und zugespitzten Borsten 5,6. Die Grösse der Auslenkung kann durch Wahl von Strom, Motor und/oder Schwingungsgebern bestimmt werden. Durch einen speziellen Aufbau des Bürstengriffes, z.B. Versteifung in vertikaler Richtung, und zusätzlichen Dämpfungsmassnahmen kann die Richtung der Auslenkung beeinflusst werden. Da die Auslenkung des Bürstenkopfes 3 und damit der Spitzen der zugespitzten Filamente 5 vorzugsweise den Interdentalräumen 2 folgt, soll die Zahnbürste vorzugsweise eine grössere seitliche Auslenkung in Richtung S1 als eine vertikale Auslenkung in Richtung S2 aufweisen. Auslenkungen von weniger als 3 mm ergeben auch hier eine sehr schonende Wirkung und eine Stimulierung des Zahnfleisches.

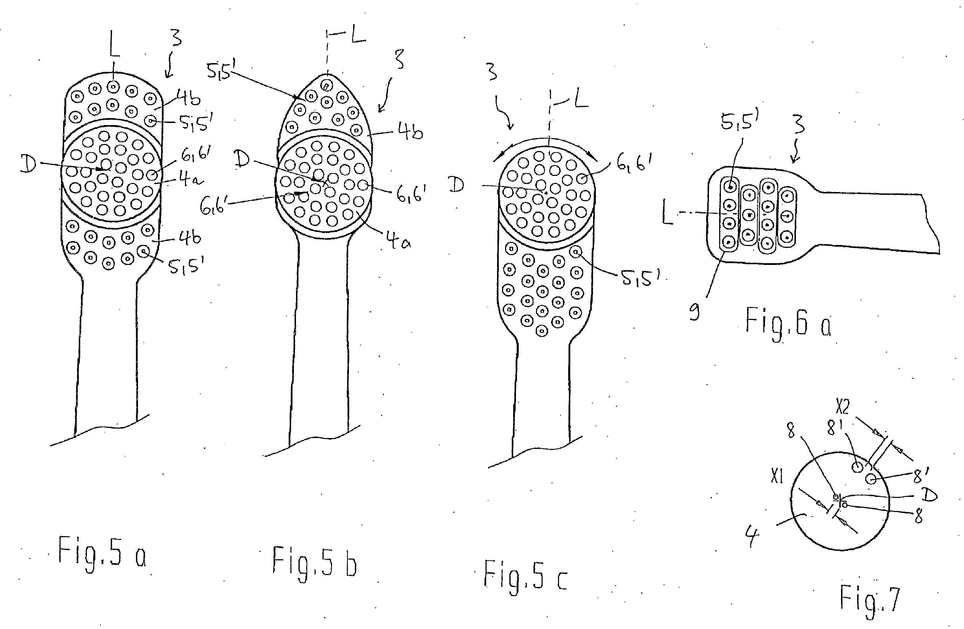

Fig. 5a-c zeigen Bürstenköpfe 3, bei denen eine Rotationsbewegung mit anderen Bewegungstypen kombiniert wird. Wird mit einer Elektrozahnbürste eine mechanische Bewegung, z.B. Rotation, ausgeführt, entstehen auf jeden Fall auch Vibrationen. In den vorliegenden Beispielen ist der Borstenträger 4 mehrteilig. Ein rundes erstes Trägerelement 4a ist um die Drehachse D drehbar mit dem Bürstenkopf 3 verbunden (vgl. Fig. 2). Es ist mit konventionellen Borsten 6 besetzt. Mindestens ein weiteres Trägerelement 4b ist fest mit dem Bürstenkopf 3 verbunden und mit zugespitzten Filamenten 5 besetzt. Er wird bei Rotation des Teils 4a in Vibration versetzt. In Fig. 5a befindet sich dieses weitere Trägerelement 4b in Längsrichtung L vor und hinter dem rotierenden Trägerelement 4a, in Fig. 5b nur hinter und in Fig. 5c nur vor diesem. Das bewegte Trägerelement 4a mit konventionellen Borsten 6 übernimmt die Flächenreinigung und das mitvibrierende, nur indirekt mechanisch bewegte Trägerelement 4b mit den zugespitzten Borsten 5 die Interdentalreinigung und zur Reinigung kleinster Strukturen. Statt das erste Trägerelement 4a zu drehen, kann es auch um die Längsachse verschwenkt werden.

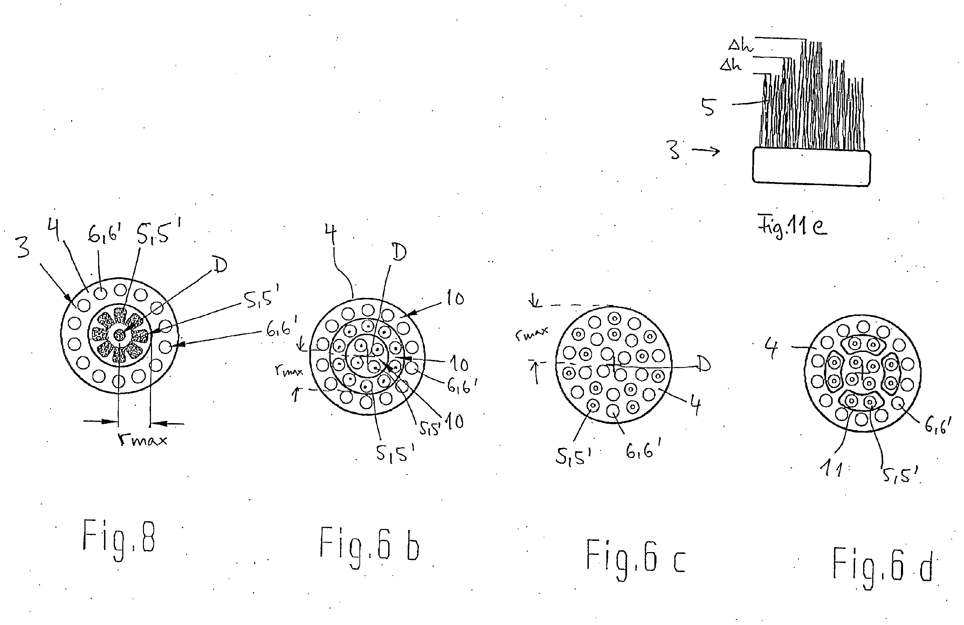

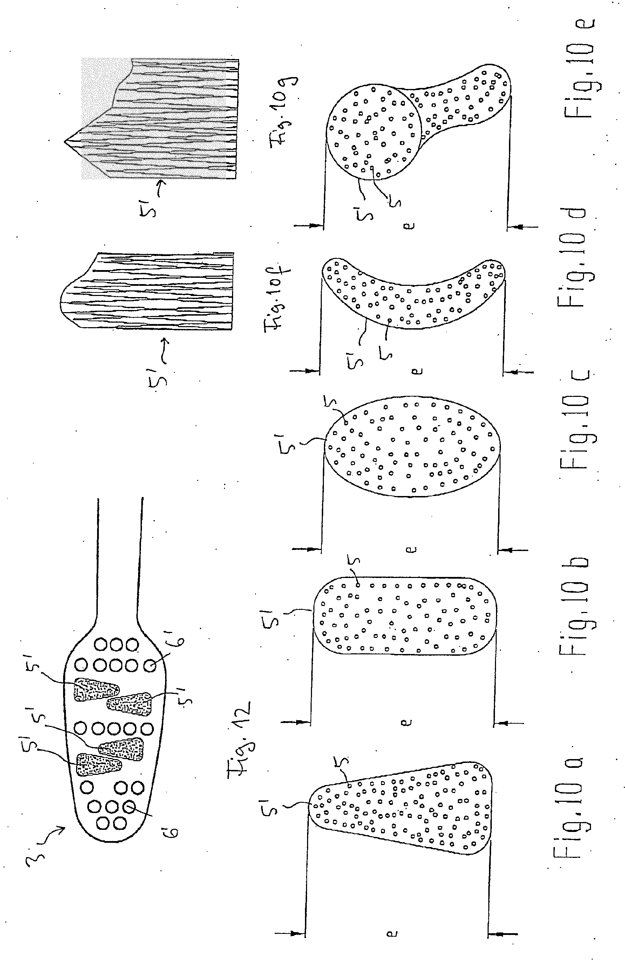

Fig. 6a-d zeigen Beispiele für die Anordnung der zugespitzten Filamente 5 auf dem Borstenträger 4. Die zugespitzten Filamente 5 sind zunächst zu Bündeln 5' zusammengefasst. Diese sind vorliegend im Querschnitt kreisförmig, können aber auch eine andere Form haben, z.B. wie in Fig. 10a-e dargestellt. Die Bündel 5' sind beim Bürstenkopf 3 gemäss Fig. 6a zu Reihen 9 zusammengefasst, die quer zur Längsrichtung L verlaufen. Diese Anordnung wird bevorzugt bei um die Längsachse L verschwenkbaren oder in dieser Richtung vibrierenden Borstenträgern 4 eingesetzt, da die Reihen 9 dort mit der Laufrichtung der Bündel 5' übereinstimmen. Beim Beispiel aus Fig. 6b sind die Borstenbündel 5' auf Kreisbögen 10 angeordnet. Diese Anordnung wird bevorzugt bei rotierenden Borstenträgern 4 eingesetzt. Es sind zwei innere Kreise aus Borstenbündeln 5' mit zugespitzten Filamenten 5 vorhanden, deren maximaler Radius rₘₐₓ ist. In beiden Fällen kann somit der Wirkbereich der zugespitzten Borsten 5 räumlich gut eingegrenzt werden.

Fig. 6c zeigt ein Beispiel für ein Borstenfeld mit gemischt angeordneten Bündeln 5', 6' aus zugespitzten und normalen Borsten 5, 6 auf einem runden Borstenträger 4 mit Radius rₘₐₓ. Das gemischte Borstenfeld hat den Vorteil, dass die zugespitzten Borsten 5 mehr Bewegungsspielraum haben und beim Gebrauch trotz Verbiegen an den Zahnstrukturen nicht untereinander verklemmen. Grundsätzlich sollte den zugespitzten Borsten 5 mehr Bewegungsspielraum zur Verfügung stehen als den normalen Borsten 6. Insbesondere im Grenzbereich, d.h. für Anordnungen, in denen die Borstenspitzen etwa die maximale Distanz dₘₐₓ zurücklegen, ist eine solche Mischung mit normalen Borsten vorteilhaft.

Fig. 6d zeigt ein Borstenfeld, bei dem die Bündel 5' aus zugespitzten Borsten 5 in kreisbogenförmigen Segmenten 11 angeordnet sind. Diese Anordnung entspricht im wesentlichen Fig. 6b und eignet sich ebenfalls für rotierende Bürsten.

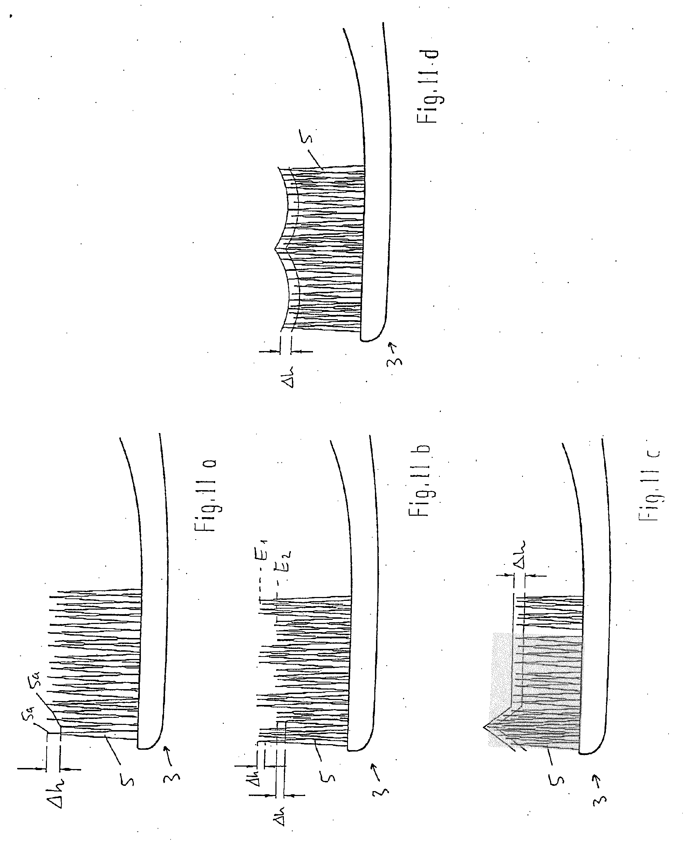

Statt Borstenbündel 5' mit rundem Querschnitt wie beschrieben in Gruppen (Reihen, Kreisen, Segmenten) anzuordnen, können auch Borstenbündel 5' mit einem entsprechend angepassten Querschnitt verwendet werden (siehe Fig. 11a-e).

Damit sich die zugespitzten Filamente 5 frei bewegen können und die Interdentalräume 2 nicht verstopft werden, sind die einzelnen Bündel 8 bevorzugt genügend voneinander beabstandet. Da die Spitzen bei gewissen Ausführungsformen in Abhängigkeit von ihrem Ort auf dem Borstenträger 4 unterschiedliche Distanzen zurücklegen, wird der minimale Lochabstand x zwischen benachbarten Bündeln 8 in Abhängigkeit des zurückgelegten Wegs festgelegt. Fig. 7 zeigt ein Beispiel für einen rotierenden Borstenträger 4, bei dem der Übersichtlichkeit halber nur ein zentral angeordnetes Paar von Borstenbündeln 8 und ein peripher angeordnetes weiteres Paar von Borstenbündeln 8' gezeigt ist. Die minimalen Abstände x1 nahe der Rotationsachse D sind kleiner als die minimalen Abstände x2 weiter entfernt von der Rotationsachse D.

Da sich bei gewissen Ausführungsformen zugespitzter Besatz nur an geeigneter Position auf der Bürstenkopfoberfläche anbietet, können an den nicht geeigneten Positionen andere Filamenttypen eingesetzt werden. Konventionell abgerundete Borsten, die z.B. aus Polyester PBT oder Polyamid PA bestehen, können insbesondere zur Flächenreinigung der Zahnoberfläche eingesetzt werden. Falls zusätzlich ein Massageeffekt des Zahnfleisches erwünscht ist, können zusätzlich weiche gummielastische Elemente in Form von Borsten, Lamellen oder anderen Gebilden aus thermoplastischem Elastomer TPE gespritzt oder eingesetzt werden. Fig. 8 zeigt ein Beispiel für einen Borstenträger 4 mit einem solchen gemischten Borstenfeld aus zugespitzten Filamenten 5 innerhalb eines zentralen Feldes mit Radius rₘₐₓ und peripher angeordneten konventionellen Borstenbündeln 6.

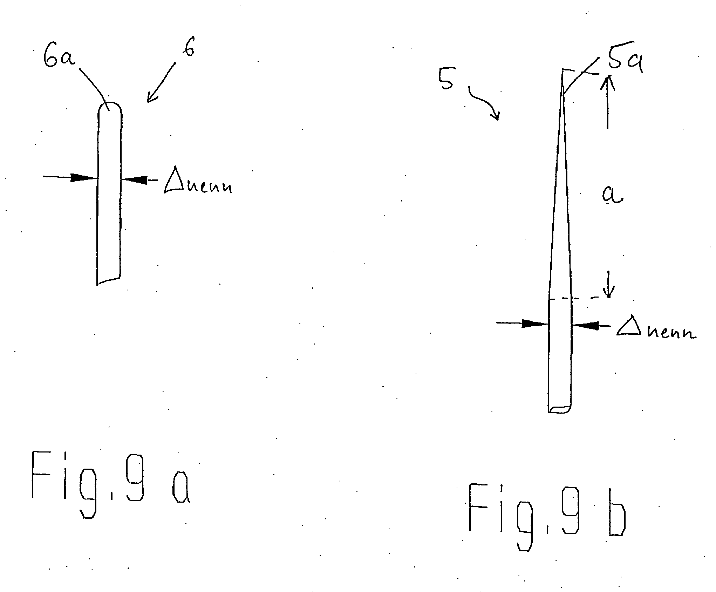

Fig. 9a, b erläutert die Dimensionierung der konventionellen bzw. zugespitzten Borsten 5, 6. Die in Fig. 9a skizzierten konventionellen Borsten 6 haben über ihre Länge einen im wesentlichen konstanten Nenndurchmesser Δₙₑₙₙ (Durchmesser an der dicksten Stelle der Borste), der z.B. 0,15 bis 0, 25 mm beträgt. Die Spitze 6a der Borste ist abgerundet.

Um das Verletzungspotential bei Zahnbürsten mit hochfrequenten Bewegungen zu minimieren und deren Lebensdauer zu maximieren, sind besondere Anforderungen an die Geometrie und die Beschaffenheit der zugespitzten Filamente 5 gestellt. Die in Fig. 9b skizzierten zugespitzten Borsten 5 haben über einen Bereich ihrer Länge ebenfalls einen konstanten Durchmesser, z.B. ebenfalls einen Nenndurchmesser von 0,15 - 0,25 mm. Zur Spitze 5a hin verjüngt sich die Borste 5, beginnend bei einem Abstand a von der Spitze 5a. Gemessen ab der Spitze 5a entspricht der Durchmesser an der entsprechenden Stelle beispielsweise folgenden Werten:

| Abstand (mm) | % des Nenndurchmessers | |
|---|---|---|
| | Mittelwert | Toleranzbereich |
| 0,1 | 8% | 5-15% |
| 1 | 25% | 15-35% |
| 2 | 45% | 30-60% |
| 3 | 60% | 50-80% |
| 4 | 75% | 60-90% |
| 5 | 80% | 70-90% |
| 6 | 85% | > 75% |
| 7 | 90% | >80% |

Um eine genügende Flexibilität der Filamente zu erreichen wird deren Länge ab Austritt aus dem Bürstenkopf zwischen 7 und 13 mm gewählt. Um bei einer hochfrequenten Bewegung genügend Stabilität der einzelnen Filamente zu bewahren, wird der Nenndurchmesser über einen Grossteil der Länge auf über 75% belassen. Die oben aufgeführte Tabelle zeigt, dass die Zuspitzung der Filamente zum überwiegenden Teil auf den letzten 4 bis 5 mm erfolgen. Mit dieser Ausgestaltung kann die Spitze 5a kleinste Fissuren und die Interdentalräume 2 bei genügender Filamentstabilität optimal erreichen.

Für die zugespitzten Borsten wird Polyamid vorzugsweise aber Polyester (PBT) eingesetzt. Der Zuspitzungsprozess basiert auf der Reduktion des Durchmessers mittels einem chemischen Prozess. Je nach Länge des Aufenthaltes der Borste in der chemischen Substanz baut sich der Kunststoff ab und verringert sich der Durchmesser. Die Form der Spitze ist so beeinflussbar.

Fig. 10a-e zeigt Beispiele für die Form von Bündeln 5' aus zugespitzten Filamenten 5. Ein derartiges Bündel 5' muss nicht unbedingt eine runde Form haben. Es kommen im wesentlichen dreieckige (Fig. 10a), im wesentlichen rechteckige (Fig. 10b), elliptische (Fig. 10c), kreisbogenförmige (Fig. 10d) oder sonstige Formen (Fig. 10e) in Frage. Die länglichen Formen gemäss Fig. 10a-c bieten sich insbesondere für verschwenkbare Zahnbürsten an und können statt der Anordnung runder Borstenbündel in Reihen eingesetzt werden (vgl. Fig. 12, in der ein gemischtes Borstenfeld aus normalen Borstenbündeln 6' mit rundem Querschnitt und Bündeln 5' aus zugespitzten Borsten 5 mit der in Fig. 10a dargestellten Form gezeigt ist). Die in Fig. 10d gezeigte Form ist besonders vorteilhaft für rotierende Zahnbürsten.

Die grösste Ausdehnung e beträgt vorzugsweise etwa 3 mm und entspricht damit einem grossen Interdentalabstand. Werden zu viele Filamente pro Bündel 5' zusammengefasst, kann dies zu einer unnötigen Versteifung der einzelnen Filamente 5 kommen und das Eindringen in die Interdentalräume 2 erschweren. Ein Bündel 5' enthält daher vorzugsweise weniger als 80, besonders bevorzugt weniger als 50 zugespitzte Spitzen 5a der Filamente 5. Dabei kann je nach Herstellungstechnik jedes Filament eine oder zwei zugespitzte Spitzen 5a haben. Gewisse Filamente haben auch eine runde und eine spitze Spitze 5a.

Fig. 10f+g zeigen Beispiele für das Höhenprofil der Borstenbündel 5' aus Fig. 11d bzw. Fig. 11e. Derartige nicht konstante Höhenprofile werden bevorzugt im AFT- oder IMT-Verfahren realisiert.

Fig. 11a-e zeigen Bürstenköpfe 3 in Seitenansicht, bei denen die Spitzen 5a der zugespitzten Filamente 5 verschiedene Profile ausbilden. Fig. 11a-d beziehen sich auf verschwenkbare Bürstenköpfe, Fig. 11e auf einen rotierenden Bürstenkopf.

Fabrikationstechnisch bedingt ist das in Fig. 11a gezeigte flache Profil am einfachsten herzustellen. Dabei wird unter Verwendung konventioneller Stanztechnologie nur eine Filamentgrundlänge verwendet. Etwa 80% der Filamentenden sind innerhalb eines Höhenbereichs Δh von 4 mm Breite positioniert. Unterschiedliche Filamentlängen innerhalb dieser Grenzen sind bis zu einem gewissen Grad erwünscht, da sie damit eine interdentale Penetration einfacher gewährleisten, als bei einer exakt gleichen Länge, wie sie beim Schneiden von konventionellen Borsten entsteht. Einzelne, massiv vorstehende Filamente sollten allerdings vermieden werden, da diese insbesondere bei einer hochfrequenten Bewegung die Gefahr von Verletzung des Zahnfleisches bergen.

Fig. 11b zeigt einen Bürstenkopf, bei dem mittels konventioneller Stanztechnologie mit zwei verschiedenen Grundlängen der zugespitzten Borsten eine von einer Ebene abweichende Profilform erzeugt ist. Üblicherweise sind beide Enden der Filamente zugespitzt. Letztere werden zum Beborsten U-förmig gebogen. Aus diesem Grund kann man den zugespitzten Besatz nicht schneiden und ist mit dieser Technologie auf verschiedene Ebenen, hier Ebenen E1 und E2 limitiert. Innerhalb der Ebenen E1, E2 sind wiederum Höhenvariationen innerhalb des etwa 4 mm breiten Höhenbereichs Δh möglich. Mehr Freiheiten ergeben sich bei einseitig zugespitzten Filamenten.

Werden aus den bereits genanten Gründen verschiedene Filamenttypen kombiniert, sind die zugespitzten Filamente 5 zur Interdentalreinigung bevorzugt länger als konventionell abgerundete Borsten oder Massageelemente. Das Einsetzen der unterschiedlichen Borstentypen in den Borstenträger erfolgt vorzugsweise bei gleichzeitigem Verdrängen der jeweils anderen Borstensorte(n). Alternativ können die Borstenträger 4 mehrteilig sein, separat beborstet und anschliessen zusammengefügt werden.

Zur Herstellung der erfindungsgemässen Bürstenköpfe 3 bietet sich vor allem das AFT (Anchor Free Tufting) oder IMT (In Mould Tufting) Verfahren an. Das AFT-Verfahren ist beispielsweise in der EP-A 0 972 464 beschrieben. Das IMT-Verfahren ist beispielsweise in der EP-A 0 795 711 und der EP-A 0 346 646 beschrieben. Die zugespitzten Filamente 5 werden in diesem Fall, anders als beim konventionellen Stopfen, nur einseitig zugespitzt der AFT oder IMT Anlage zugeführt. Die Länge der Filamente beträgt zwischen 10 und 20 mm. Vorzugsweise werden die Filamente mit den Spitzen nach unten in den Stopfkasten eingeführt. Eine spätere Umorientierung innerhalb der AFT oder IMT Anlage erübrigt sich somit. Die Filamente werden durch die schiebenden Mittel auf der zugespitzten Seite durch den Borstenträger (bei IMT durch die Transporteinsätze) gestossen. Der Borstenträger weist dazu Ausnehmungen für die Borsten auf. Die nicht zugespitzte Seite wird geschnitten und anschliessend wie bekannt aufgeschmolzen. Falls der Borstenträger nicht einstückig mit dem Bürstenkopf ist, werden die beiden Teile anschliessen vorzugsweise mittels Ultraschallschweissen miteinander verbunden.

Das AFT oder IMT Verfahren ermöglicht eine vereinfachte Herstellung der zugespitzten Filamente, da diese nur einseitig zugespitzt werden müssen. Des weiteren können durch entsprechende Ausgestaltung der schiebenden Mittel die einzelnen Bündel profiliert werden, z.B. zur besseren Interdentalpenetration. Beispiele hierfür sind in Fig. 11c-e bzw. auch in Fig. 10f+g (Profilierung der einzelnen Bündel) gezeigt. Dies ist mit der konventionellen Stopftechnologie nicht möglich. Da die Filamente nach dem Profilieren geschnitten werden, muss nur eine Filamentlänge geführt werden. Die Borsten können auf die erwünschte Länge zugeschnitten werden. Im Gegensatz dazu müssen bei konventioneller Stopftechnologie mehrere Stofflängen eingesetzt werden, um eine von der Ebene abweichende Topographie zu erstellen.

Das AFT- und IMT-Verfahren hat somit grosse Vorteile zur Herstellung der erfindungsgemässen Zahnbürsten, da es eine weitgehend beliebige Form der Borstenbündel ermöglicht. Somit kann der von den Spitzen im Gebrauch zurückgelegte Weg besonders gut kontrolliert werden. Das Herstellungsverfahren kann vorteilhaft auch zur Herstellung von manuellen Zahnbürsten eingesetzt werden.

## Patentansprüche

1. Elektrozahnbürste aufweisend einen Bürstenkopf (3) mit
einem Borstenträger (4), der in zwei Richtungen S1, S2 quer zur Längsrichtung L des Bürstenkopfs (3) vibriert, wobei
in dem Borstenträger (4) Borsten verankert sind, die beim Betrieb der Elektrozahnbürste entsprechend in Bewegung versetzt werden, wobei der Borstenträger (4) ein Borstenfeld aufweist mit zugespitzten Borsten (5) mit sich verjüngenden Spitzen (5a), welche in Bündeln (5') angeordnet sind, wobei die Bündel (5') eine Vielzahl von zugespitzten Borsten (5) umfassen, wobei die zugespitzten Borsten (5) einen maximalen Durchmesser (Nenndurchmesser) von 0,15 bis 0,25 mm und eine vom Austrittspunkt auf dem Borstenträger (4) gemessene Länge von 7 bis 13 mm haben,
wobei der Durchmesser bis zu einem Abstand von 5 bis 6 mm von der Spitze (5a) grösser als 75% des Nenndurchmessers ist und sich in einem geringeren Abstand verkleinert,
und wobei ihre Spitzen (5a) beim Betrieb der Elektrozahnbürste höchstens einen vorbestimmten maximalen Weg dmax von 3 mm zurücklegen.

2. Elektrozahnbürste nach Anspruch 1, **dadurch gekennzeichnet, dass** das Borstenfeld ein gemischtes Borstenfeld (5, 6) ist, welches zusätzlich zu den zugespitzten Borsten (5) konventionelle Borsten (6) mit einem im Wesentlichen konstanten Durchmesser und abgerundeten Spitzen (6a) aufweist, wobei die konventionellen Borsten (6) in Bündeln (6') angeordnet sind, wobei die Bündel (6') eine Vielzahl von konventionellen Borsten (6) umfassen und wobei vorzugsweise die zugespitzten Borsten (5) länger sind als die konventionellen Borsten (6).

3. Elektrozahnbürste nach Anspruch 1 oder 2, **dadurch gekennzeichnet, dass** der Weg dmax von der Bewegungsrichtung abhängt, wobei der maximale Weg in Längsrichtung, längs des Bürstenkopfes (3), vorzugsweise geringer ist als der maximale Weg quer dazu.

4. Elektrozahnbürste nach einem der vorhergehenden Ansprüche, **dadurch gekennzeichnet, dass** der Bürstenkopf (3) derart angetrieben wird, dass die Borsten (5, 6) mehr als 5000 Bewegungen pro Minute ausführen.

5. Elektrozahnbürste nach Anspruch 1, **dadurch gekennzeichnet, dass** der Durchmesser der zugespitzten Borsten (5), gemessen in einem Abstand von 1 mm von der Spitze (5a) zwischen 15 bis 35 % des Nenndurchmessers beträgt.

6. Elektrozahnbürste nach Anspruch 1, **dadurch gekennzeichnet, dass** der Durchmesser der zugespitzten Borsten (5), gemessen in einem Abstand von 2 mm von der Spitze (5a) zwischen 30 bis 60 % des Nenndurchmessers beträgt.

7. Elektrozahnbürste nach Anspruch 1, **dadurch gekennzeichnet, dass** der Durchmesser der zugespitzten Borsten (5), gemessen in einem Abstand von 4 mm von der Spitze (5a) zwischen 60 bis 90 % des Nenndurchmessers beträgt.

8. Elektrozahnbürste nach einem der vorhergehenden Ansprüche, **dadurch gekennzeichnet, dass** die zugespitzten Borsten (5) in Bündeln (5') angeordnet sind, die vorzugsweise weniger als 80, besonders bevorzugt weniger als 50 Spitzen (5a) enthalten.

9. Elektrozahnbürste nach Anspruch 8, **dadurch gekennzeichnet, dass** die Bündel (5') eine maximale Breite e von ca. 3 mm haben, wobei die Richtung der maximalen Ausdehnung bevorzugt mit der Richtung der Bewegung des Bürstenkopfs übereinstimmt.

10. Elektrozahnbürste nach Anspruch 8 oder 9, **dadurch gekennzeichnet, dass** die Bündel (5') in Bewegungsrichtung hintereinander auf dem Borstenträger (4) angeordnet sind, vorzugsweise bei einem rotierenden Borstenträger (4) entlang einer Kreisbahn (10) oder bei einem schwenkbaren Borstenträger in Reihen (9) quer zur Schwenkachse.

11. Elektrozahnbürste nach einem der vorhergehenden Ansprüche, **dadurch gekennzeichnet, dass** wenigstens 80% der zugespitzten Borsten (5) eine vom Austrittspunkt auf dem Borstenträger (4) gemessene Länge aus dem Intervall [L, L+4mm] haben, wobei L eine vorbestimmte Länge ist, die vorzugsweise 6-8 mm beträgt.

12. Elektrozahnbürste nach einem der vorhergehenden Ansprüche, **dadurch gekennzeichnet, dass** die Bündel (5') mit den zugespitzten Borsten (5) ein nichtkonstantes Höhenprofil bilden.

13. Elektrozahnbürste nach einem der vorhergehenden Ansprüche, **dadurch gekennzeichnet, dass** der Borstenträger (4) weichelastische Reinigungselemente umfasst.

14. Elektrozahnbürste nach Anspruch 13, **dadurch gekennzeichnet, dass** die weichelastischen Reinigungselemente zwischen den zugespitzten Borsten (5) angeordnet sind.

## Claims

1. Electric toothbrush having a brush head (3) with a bristle support (4), which vibrates in two directions S1, S2 transversely with respect to the longitudinal direction L of the brush head (3), wherein bristles anchored in the bristle support (4) are accordingly set in motion during the operation of the electric toothbrush, wherein the bristle support (4) has a bristle zone having tapered bristles (5) with narrowing tips (5a), which are arranged in tufts (5'), wherein the tufts (5') comprise a multiplicity of tapered bristles (5), wherein the tapered bristles (5) have a maximum diameter (nominal diameter) of 0.15 to 0.25 mm and a length of 7 to 13 mm measured from the point of emergence on the bristle support (4), wherein the diameter up to a distance of 5 to 6 mm from the tip (5a) is greater than 75% of the nominal diameter and decreases at a smaller distance, and wherein their tips (5a), during the operation of the electric toothbrush, cover at most a predetermined maximum path dmax of 3 mm.

2. Electric toothbrush according to Claim 1, **characterized in that** the bristle zone is a mixed bristle zone (5, 6) which, in addition to the tapered bristles (5), has conventional bristles (6) with a substantially constant diameter and rounded tips (6a), wherein the conventional bristles (6) are arranged in tufts (6'), wherein the tufts (6') comprise a multiplicity of conventional bristles (6), and wherein the tapered bristles (5) are preferably longer than the conventional bristles (6).

3. Electric toothbrush according to Claim 1 or 2, **characterized in that** the path dmax depends on the direction of movement, wherein the maximum path in the longitudinal direction, along the brush head (3), is preferably shorter than the maximum path transverse thereto.

4. Electric toothbrush according to one of the preceding claims, **characterized in that** the brush head (3) is driven in such a way that the bristles (5, 6) execute more than 5000 movements per minute.

5. Electric toothbrush according to Claim 1, **characterized in that** the diameter of the tapered bristles (5), measured at a distance of 1 mm from the tip (5a), is between 15 and 35% of the nominal diameter.

6. Electric toothbrush according to Claim 1, **characterized in that** the diameter of the tapered bristles (5), measured at a distance of 2 mm from the tip (5a), is between 30 and 60% of the nominal diameter.

7. Electric toothbrush according to Claim 1, **characterized in that** the diameter of the tapered bristles (5), measured at a distance of 4 mm from the tip (5a), is between 60 and 90% of the nominal diameter.

8. Electric toothbrush according to one of the preceding claims, **characterized in that** the tapered bristles (5) are arranged in tufts (5') which preferably contain fewer than 80, particularly preferably fewer than 50 tips (5a).

9. Electric toothbrush according to Claim 8, **characterized in that** the tufts (5') have a maximum width e of ca. 3 mm, wherein the direction of the maximum extent preferably coincides with the direction of movement of the brush head.

10. Electric toothbrush according to Claim 8 or 9, **characterized in that** the tufts (5') are arranged behind one another on the bristle support (4) in the direction of movement, preferably along a circular orbit (10) in the case of a rotating bristle support (4) or in rows (9) transverse to the pivot axis in the case of a pivotable bristle support.

11. Electric toothbrush according to one of the preceding claims, **characterized in that** at least 80% of the tapered bristles (5) have a length, measured from the point of emergence on the bristle support (4), from the range [L, L+4mm], wherein L is a predetermined length preferably measuring 6-8 mm.

12. Electric toothbrush according to one of the preceding claims, **characterized in that** the tufts (5') with the tapered bristles (5) form a non-constant height profile.

13. Electric toothbrush according to one of the preceding claims, **characterized in that** the bristle support (4) comprises soft-elastic cleaning elements.

14. Electric toothbrush according to Claim 13, **characterized in that** the soft-elastic cleaning elements are arranged between the tapered bristles (5).

## Revendications

1. Brosse à dents électrique comportant une tête de brosse (3) dotée
d'un support de poils (4), lequel vibre dans deux directions S1, S2 transversales à la direction longitudinale L de la tête de brosse (3), dans laquelle des poils sont ancrés dans le support de poils (4), lesquels sont mis en mouvement de manière correspondante lors du fonctionnement de la brosse à dents électrique, dans laquelle le support de poils (4) comporte un tapis de poils doté de poils pointus (5) dont les pointes (5a) se rétrécissent, lesquelles sont agencées en faisceaux (5'), dans laquelle les faisceaux (5') comprennent une pluralité de poils pointus (5), dans laquelle les poils pointus (5) ont un diamètre maximal (diamètre nominal) de 0,15 mm à 0,25 mm et une longueur mesurée à partir du point de sortie sur le support de poils (4) de 7 à 13 mm,
dans laquelle le diamètre est supérieur à 75 % du diamètre nominal jusqu'à une distance de 5 à 6 mm de la pointe (5a) et décroît à une distance inférieure,
et dans laquelle leurs pointes (5a) parcourent une course prédéterminée maximale dmax de 3 mm lors du fonctionnement de la brosse à dents électrique.

2. Brosse à dents électrique selon la revendication 1, **caractérisée en ce que** le tapis de poils est un tapis de poils mélangés (5, 6), lequel comporte, outre les poils pointus (5), des poils conventionnels (6) dotés d'un diamètre essentiellement constant et de pointes arrondies (6a), dans laquelle les poils conventionnels (6) sont agencés en faisceaux (6'), dans laquelle les faisceaux (6') comprennent une pluralité de poils conventionnels (6) et dans laquelle les poils pointus (5) sont de préférence plus longs que les poils conventionnels (6).

3. Brosse à dents électrique selon la revendication 1 ou 2, **caractérisée en ce que** la course dmax dépend de la direction de mouvement, dans laquelle la course maximale dans la direction longitudinale, le long de la tête de brosse (3), est de préférence plus faible que la course maximale dans la direction transversale.

4. Brosse à dents électrique selon l'une des revendications précédentes, **caractérisée en ce que** la tête de brosse (3) est entraînée de telle sorte que les poils (5, 6) effectuent plus de 5000 mouvements par minute.

5. Brosse à dents électrique selon la revendication 1, **caractérisée en ce que** le diamètre des poils pointus (5), mesuré à une distance de 1 mm de la pointe (5a), vaut entre 15 et 35 % du diamètre nominal.

6. Brosse à dents électrique selon la revendication 1, **caractérisée en ce que** le diamètre des poils pointus (5), mesuré à une distance de 2 mm de la pointe (5a), vaut entre 30 et 60 % du diamètre nominal.

7. Brosse à dents électrique selon la revendication 1, **caractérisée en ce que** le diamètre des poils pointus (5), mesuré à une distance de 4 mm de la pointe (5a), vaut entre 60 et 90 % du diamètre nominal.

8. Brosse à dents électrique selon l'une des revendications précédentes, **caractérisée en ce que** les poils pointus (5) sont agencés en faisceaux (5'), qui contiennent de préférence moins de 80, de manière particulièrement préférée moins de 50 pointes (5a).

9. Brosse à dents électrique selon la revendication 8, **caractérisée en ce que** les faisceaux (5') ont une largeur maximale e d'environ 3 mm, dans laquelle la direction de l'étendue maximale coïncide de préférence avec la direction du mouvement de la tête de brosse.

10. Brosse à dents électrique selon la revendication 8 ou 9, **caractérisée en ce que** les faisceaux (5') sont agencés sur le support de poils (4) l'un derrière l'autre dans la direction du mouvement, de préférence le long d'une trajectoire circulaire (10) lorsqu'un support de poils (4) est en rotation ou en lignes (9) transversalement à l'axe de pivot lorsqu'un support de poils peut pivoter.

11. Brosse à dents électrique selon l'une des revendications précédentes, **caractérisée en ce qu'**au moins 80 % des poils pointus (5) ont une longueur mesurée à partir du point de sortie sur le support de poils (4) dans un intervalle [L, L+4 mm], dans laquelle L est une longueur prédéterminée valant de préférence 6 à 8 mm.

12. Brosse à dents électrique selon l'une des revendications précédentes, **caractérisée en ce que** les faisceaux (5') forment avec les poils pointus (5) un profil de hauteur non-constant.

13. Brosse à dents électrique selon l'une des revendications précédentes, **caractérisée en ce que** le support de poils (4) comprend des éléments nettoyants souples et élastiques.

14. Brosse à dents électrique selon la revendication 13, **caractérisée en ce que** les éléments nettoyants souples et élastiques sont agencés entre les poils pointus (5).
